Europäisches Patentamt

(19) European Patent Office

Office européen des brevets

(11) Publication number: **0 217 982**
B1

# EUROPEAN PATENT SPECIFICATION

(45) Date of publication of the patent specification:
28.11.90

(21) Application number: 85305689.3

(22) Date of filing: 12.08.85

(51) Int. Cl.⁵: **B65D 30/20,** B65D 33/10, B65D 33/00, B31B 37/00

(54) A thermoplastic bag, method and system for its manufacture.

(43) Date of publication of application:
15.04.87 Bulletin 87/16

(45) Publication of the grant of the patent:
28.11.90 Bulletin 90/48

(84) Designated Contracting States:
AT CH LI LU SE

(56) References cited:
EP-A- 0 021 463
WO-A-84/00322
FR-A- 1 055 074
FR-A- 2 027 997
US-A- 2 725 798
US-A- 3 119 548
US-A- 4 326 664

(73) Proprietor: MOBIL OIL CORPORATION, 150 East 42nd Street, New York New York 10017(US)

(72) Inventor: Benoit, Gordon Leon, 113 Creekside Drive, Macedon New York 14502(US)

(74) Representative: Cooper, John Anthony et al, Mobil Court 3 Clements Inn, London WC2A 2EB(GB)

## Description

The present invention relates to a thermoplastic bag having integral handles and also to individual bag packs of such bag structures. The type of bag contemplated herein is particularly adapted for use as a grocery sack capable of carrying loads of up to about 13.60-15.85 kilograms.

For years in the United States the means for carrying items purchased in a grocery store or supermarket has been the paper sack. This sack, as is well known, is made of kraft paper, which has a high beam strength as compared, for example, with thermoplastic film. Thus, bags made of this material, when fully extended, are capable of supporting themselves. When such bags are filled with grocery items, they have the desirable attribute of being able to stand upright. In addition, kraft paper bags are made so as to have opposing gusseted sides and a foldable-extensible rectangular bottom. This type of structure, when fully extended, provides the maximum volumetric efficiency for a container of this type. The volume of such a sack is represented by a rectangular bottom projected to the height of the bag.

These two attributes are about the only positive aspects of kraft paper grocery sacks. When folded and collapsed they are bulky and occupy considerably more space than thin film thermoplastic grocery sacks. Whatever cost advantage paper grocery sacks enjoyed in the past appears to be disappearing. Paper grocery bags are notorious for their lack of wet strength in an environment which constantly exposes them to the deleterious affects of aqueous liquids. This causes the bags to fail and spill their contents on the supermarket floor, the parking lot blacktop, the purchaser's automobile, or during transfer from the automobile to the purchaser's home. The time needed for supermarket employees to fill kraft paper sacks, as opposed to thermoplastic film grocery sacks, is on average, longer. Such bags produce paper-cuts, which have become an occupational hazard with kraft paper bags. Kraft paper bags have limited reuse possibilities and they are not a stable land fill material.

In the late 1970's and early 1980's, thin film thermoplastic handled grocery sacks began to make significant inroads into an area totally dominated by the kraft paper grocery sack.

U.S. Patent No. 4,165,832 describes to some degree the evolution of handled bags from the time when handled elements were separately attached to the open mouth portion of the bag. This patent also discusses the improvement of forming an ungusseted bag having integral thermoplastic handles as a part thereof. This ungusseted type of bag is constructed from a pillowcase type blank consisting of two sheets of plastic, e.g., from a collapsed tube, sealed at opposite ends. A U-shaped cutout at one end fashions an opening for the bag and a separate cut or slit opens two loops which constitute the handles of the bag. A further evolution in this bag structure came about when the bag was made to have gusseted sides. This permitted the handles to be fashioned of two layers of film which gave the handles additional strength. In all cases the bottom of the bag constituted either a heat sealed double layer of film, or in the case of a gusseted structure, the folds of the gusset were sealed at the bottom between the front and back sides of the bag. This latter seal can be considered the "trapped gusset" seal.

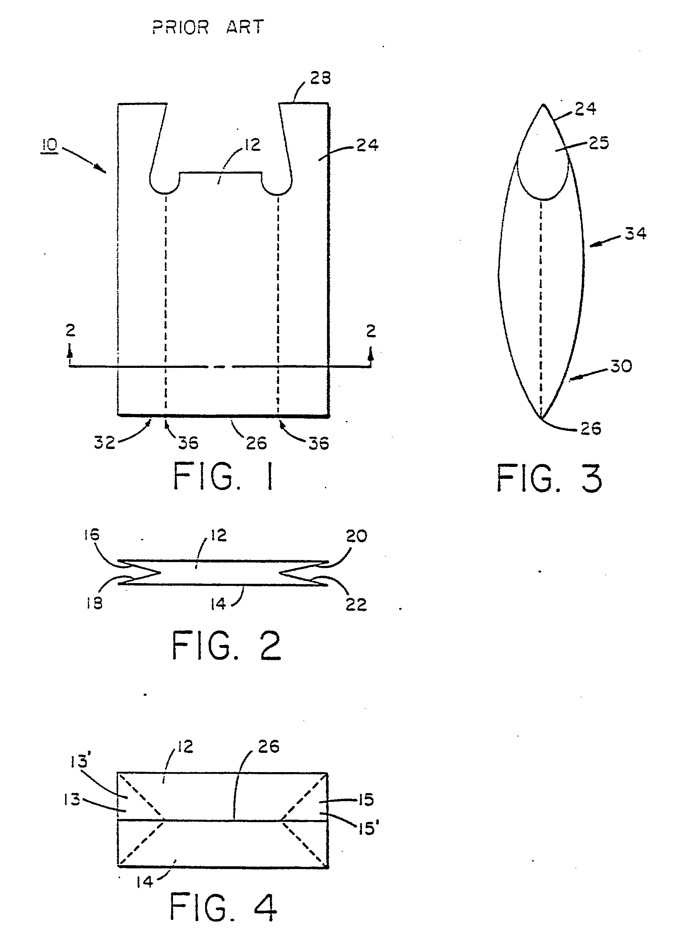

Since the late 1970's to the present time, the commercial plastic grocery sack has had a bottom region which has not changed. Figures 1-4 of the present application illustrate a thermoplastic film grocery sack of the general type manufactured by almost every thermoplastic grocery sack manufacturer in the United States. This grocery sack is made by collapsing a thermoplastic tube, and while in the process of collapsing, forming therein two side gussets. The gussets are represented in Figure 2 by infolded regions 16 and 18 on one side and 20 and 22 on the opposite side. After the gusseted tube has been fully collapsed, it is sealed and severed along lines 26 and 28. Seal line 28 is the handled and open mouth end portion of the bag after the plastic film is removed, forming both the bag mouth opening and handles of the bag. Seal line 26 constitutes the closed end of the bag. As will be appreciated, during the sealing of the bottom region of the bag, four films are heat sealed together at the outboard region of the bag, i.e., 12, 16, 18 and 14 on the one side and 12, 20, 22 and 14 on the other side, and in the center region only two films, 12 and 14, are heat sealed together.

This bag bottom structure, adopted almost exclusively by the plastic grocery sack manufacturers, has at least two shortcomings. The first is that whenever there is a thickness transition involving a heat seal, where a thicker region transitions down to a thinner region, as in the gusset region of four layers transitioning at a fold point down to the two layers of the front and rear panels of the sack, a weak spot is created at the fold point. This becomes a tear initiation point as the bag is loaded with goods and as the bag tries to expand to accommodate the goods. The bottom of the gusset being trapped and sealed within the front and rear panels of the bag in the regions 32 of Figure 1 at both bottom outboard regions of the bag, cannot expand to accommodate goods in the bottom of the bag as well as it can in the upper midway region of the bag where the side gussets expand to the maximum. Figure 3 shows a side view of the bag of Figure 1 in an expanded condition. It will be noted that the lower region 30 of the bag has less effective volume than the central region 34 of the bag. As indicated, because the bottom of the gusset on both sides of the bag is trapped and sealed between the front and rear layers of the bag walls, they cannot expand to accommodate increasing bag expansion caused by goods being loaded therein. Weight and hoop stress forces are brought to bear at points 36 on both sides of the bag, with the result that tears in the bottom seal are initiated at these points. This asymmetrical load distribution places no load on the bottom seal between 36 and the bag corner. As the hoop and load forces increase, the tears can progress to permit products to fall from the bag. Since this type of grocery sack is suspended from its integral handles, there is no bottom support safeguard to protect items from falling through the bottom of such a bag.

The second disadvantageous aspect of such a seal-trapped gusset arrangement is the fact that the sides of the bag cannot expand to their full width, and, thus, full volumetric efficiency is sacrificed. When examined carefully, for example in a bag as described measuring 12 inches by 8 inches (4 inch gussets) by 24 inches, including handle length, a significant percentage of the bag film (exclusing the handles) does not contribute to bag volume. Over 8% of the bag film is wasted in the bottom of the bag because of the trapped gussets.

U.S. Patent No. 3 119 548 describes a thermoplastic bag having a square or rectangular bottom which avoids the trapped gusset structure. This sack, however, is intended as a liner for a cardboard ice cream container. Thus, this structure never was intended to support product load by means of its own integrity. An outer container provided shape and support for the thermoplastic liner. This liner is not used with handles.

U.S. Patent No. 3 580 486 describes a thermoplastic film bag which has a rectangular bottom without a seam or seal, and ungusseted sides which contain three seals when the bag is expanded. This bag contains a center handle which is only one film layer thick because of the ungusseted side structure.

In FR-A 2 027 997 there is disclosed a bag with handles attached to opposite faces of the bag at the top thereof. The handles extend substantially entirely along the length of each face.

In US Patent no. 4 165 832 there is described a bag structure having the features of the pre-characterising portion of claim 1.

Accordingly the invention provides a bag structure (40) of a thermoplastic film material comprising front and rear bag walls (60, 62) connected by gusseted side walls (50, 52) and having an open mouth top portion, said open mouth portion having handles (42) located at opposite regions thereof, said handles (42) having a double film thickness as a result of being integral extensions of said front, rear and gusseted side walls (60, 62, 50, 52); characterised in the said bag (40) has a bottom wall planarly extensible so as to form a generally flat rectangle, wherein the bottom comprises integral extensions of said front, rear and side walls (60, 62, 50, 52) and the closure thereof being 4 two-film gusset-to-wall heat seals, when said bottom is a square, and 4 two-film gusset-to-wall heat seals (54, 56) and 1 two-film front wall-to-back wall heat seal (58) when said bottom is a rectangle having unequal length and width dimensions. Further features of the invention are defined in dependent claims 1 to 5. Claims 6, 7, and 8 respectively define a bag structure pack, a roll of bag structures and a stack of bag structures, all utilising the structure of the bag according to the invention.

Reference is now made to the accompanying drawings, in which:

Figure 1 is a front elevation view representing a thermoplastic sack of the prior art;

Figure 2 is an end view taken along the lines 2–2 of Figure 1;

Figure 3 is a side elevation view of the bag structure of Figure 1 in volume expanded form;

Figure 4 is a bottom view of the bag of Figure 1 with the bottom of the bag planary extended to the exact dimensions of the four sides of the bag;

Figure 5 is a front elevation view of one form of the thermoplastic bag structure of the present invention;

Figure 6 is a bottom end view of the bag structure of Figure 5;

Figure 7 is a bottom perspective view of the bag structure of Figure 5 in volume expanded form;

Figure 8 is a side elevation view of the bag structure of Figure 5 in volume expanded form;

Figure 9 is a plan view, in schematic form, illustrating a system and process sequence of one form of the present invention; and

Figure 10 is a plan view of another form of the process and system of the present invention.

As indicated above, Figures 1, 2, 3 and 4 represent different views of a bag structure 10 of the prior art. This bag has a front panel 12, a back panel 14 and gusseted sides represented by infolded members 16, 18, 20 and 22. The gusseted members are actually single side members creased at their longitudinal midpoint. Double film handles 24 are at the bag mouth end of the bag and these handles are sealed at line 28. Handle loop opening 25 is shown in Figure 3. The bottom of bag 10 is sealed along line 26. As indicated above, this seal line 26 traps the side gussets at the bottom of the bag and prevents the bag from expanding fully, as more clearly shown in the region 30 of Figure 3. This manner of sealing the bottom of the bag inadvertently produces tear initiation points 36 when bag filling forces attempt to expand the side gussets in the bottom region of the bag.

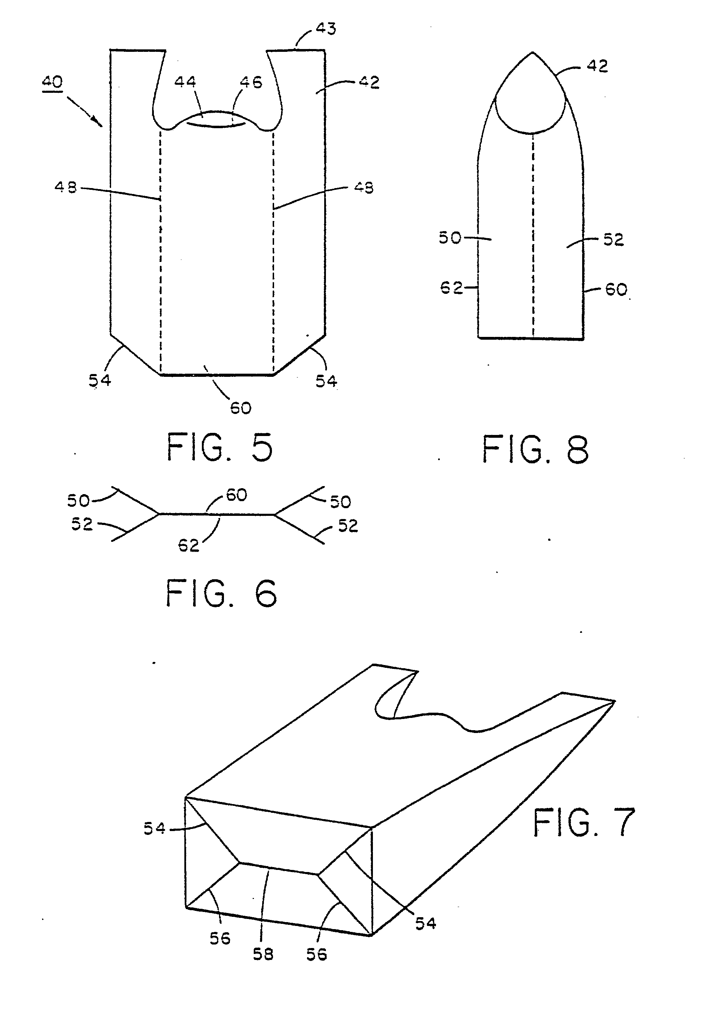

Figure 4 is illustrated herein in order to show that when a bag of the prior art, such as that illustrated in Figures 1, 2 and 3, has the bottom thereof planarly extended to the full dimensions of its sides and walls, there will seem to be two perfectly square segments of thermoplastic film externally of the inside of the bag which contributes nothing to the volumetric capacity of the bag. Moreover, this excess apparently does not contribute to the strength of the bag. This Figure is best appreciated by envisioning a cardboard box having the exact front width, gusset-side and rear width dimensions of the prior art bag illustrated in Figure 1. When such a box is placed into the bag, so that like sides of the bag and the box correspond, and the box is pushed snugly to the bottom of the bag, then the bottom of the bag will assume the configuration shown in Figure 4. Part of front panel 12 of the bag will actually become part of the bottom of the bag, as will back panel 14. Bottom heat seal seam 26 will extend all the way across the mid-point region of the bottom of the bag. By placing such a box within the bag, there will be formed, in the exterior of the bottom of the bag, two triangular shaped pockets, made up of identical right-angle triangular film members, 13 and 13' on one side and 15 and 15' on the other side. The present invention has discovered that the two triangular pockets can be removed by the elimination of triangles 13 and 13' and 15 and 15', which together constitute two perfectly square segments of film which do not materially contribute to the structural integrity or the volumetric efficiency of the bag. After removal of these segments and forming the appropriate bottom seals from adjacent film edge regions, the bag then has the bottom configuration shown in Figure 7. The result is a savings of a considerable percentage of the raw material employed in the bag and the creation of the first practical flat-bottomed thermoplastic sack having double film handles as more fully described with reference to the remaining Figures.

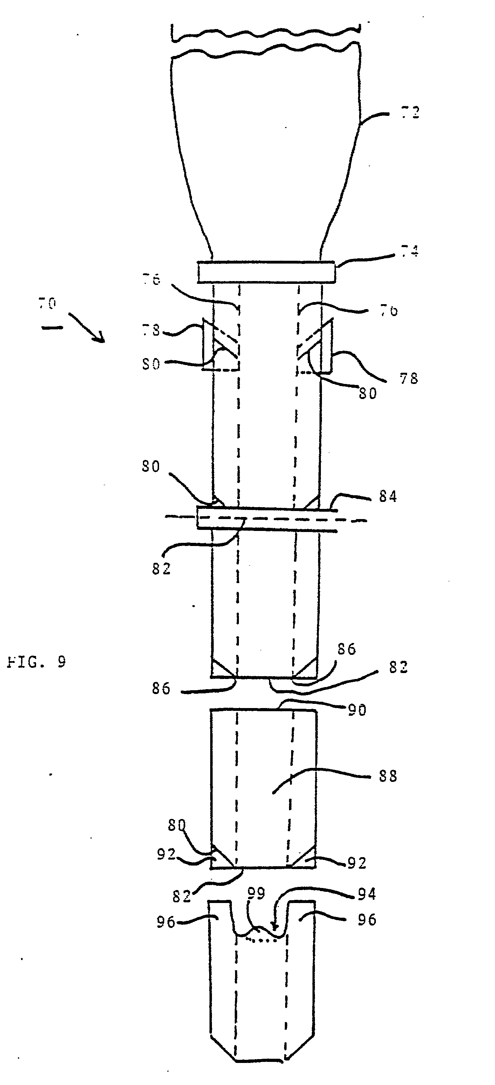

Figures 5, 6, 7 and 8 illustrate a rectangular bottom bag 40 having double film thickness handles 42 at the bag mouth end of the bag. These handles are sealed along lines 43. Each bag has two tabs 44 in registration and each has a pre-weakened tear-off region 46 for removal of each bag 40 from a plurality of superimposed bags connected together by way of tabs 44 in some suitable fashion. They may be, heat-bonded, stapled, clipped or held together by any means. Pre-weakened region 46 can be a line of perforations for bag tear-off or a continuous, somewhat arcuate slit terminating just short of the mouth of the bag, leaving two small web regions which can be snap-severed to free a bag from a bag pack. Dotted lines 48 illustrate the extent of infolding of gusset members 50 and 52, as more clearly shown in Figure 6. When fully extended, these gusset members become bag sides 50-52 as shown in Figure 8.

The bottom of bag 40 is constructed of 5 two-film heat seals. There are two heat seals 54, two heat seals 56 and a central heat seal 58. Heat seal 58 is the result of heat sealing the front bag panel 60 to rear bag panel 62. Heat seal 54 is formed by heat sealing front bag panel 60 to gusset panel 50 and heat seal 56 is formed by heat sealing rear bag panel 62 to gusset panel member 52. As will be appreciated, the bottom is formed by heat sealing no more than two films at any one point. This avoids any tear initiation point resulting from sealing a thick region to a thin region. The unnumbered outer peripheral lines of the bottom of Figure 7 are shown as if a perfect rectangular object were giving it this form. This would be the ideal utilization of such a bag and is so shown to illustrate the greater available volume of the subject bag.

A double film handle rectangular bottom bag is a novel structure particularly for supporting loads up to and greater than about 15.85 kilograms. The above described structure results in a thermoplastic bag which can be laid flat, as with the prior art structure, and occupy no more vertical space than the prior art bags. As indicated above, they can be fashioned into bag packs of any suitable number and hung from the region of tab 44 in some suitable manner for dispensing the bags one at a time. In use, product will be placed through the bag mouth opening and as more product is loaded into the bag, the bottom thereof will attempt to become planarly extended. In so doing, the maximum volumetric efficiency can be utilized. By "planarly extended" or "planarly extensible" is meant that the bottom of the bag can, unrestrictedly, be extended to be perfectly flat and rectangular in shape. For having the capability of forming a perfectly flat bottom, seal line 54 and 56 should form at least approximately a 45° angle with gusset line 48 or an angle of at least approximately 135° with seal line 58 when the bag is in its lay flat condition. Obviously, these angles can deviate more or less from these limits but the consequence will be a bag bottom which is correspondingly less planar. This is still within the spirit of the invention. Thus, it is the intention of the present invention to cover bag bottoms of the bag described type which are at least generally planar when the bag is extended.

Bags of the structure described can be formed by employing any suitable thermoplastic material, such as a polyolefin in all of its forms, and more particularly polyethylene of any gauge, for example a gauge that ranges from about 0.25-5 mils in thickness (1 mil = 0.0254 mm). In employing the term "polyethylene", it is employed generically to include all forms of polyethylene including, low density polyethylene, linear low density copolymers of ethylene and another alpha olefin, high density polyethylene, mixtures and blends of the same, and other monomer counterparts, etc. Thermoplastic coated paper stock is also contemplated.

The bags can also be constructed so as to be interconnected head to tail or tail to tail, etc. by means of pre-weakened film segments. This will permit the formation of a plurality of bags in a roll or a zig-zag stack for easy dispensing of individual bags.

In a modification of the bag structure illustrated in Figures 5, 6, 7 and 8, the gusset lines 48 can be infolded to a maximum so that they meet at the midline of the bag. The consequence of this modification, after cutting the corners at an angle of at least approximately 45° to the midline and then forming the two-film seals, as indicated above, will be a square bottomed bag. In the instance of a square bottomed bag, the two-film heat seal, line 58 of Figure 7, for example, is reduced to non-existence. The two apexes of the heat seals 54 and 56 contact one another and the bottom of the bag then will have an X shape heat seal with the lines forming the X being at least approximately equal. Another way of stating it is that the bottom closure of the bag is formed from 4 two-film heat seals. A suitable bag mouth opening and double film handle are also fashioned into the bag.

As indicated in Figure 9, 70 illustrates a system and process sequence for forming the handled, gusseted, flat bottomed thermoplastic sack of the present invention. A tube of thermoplastic film 72 is collapsed by being passed through a gusset-forming means 74.

The tube collapsing and gusset-forming means 74 can be any device suitable for accomplishing these two steps substantially simultaneously. A typical gusset-forming device is an open-ended box shaped arrangement of, for example, sheet metal material, which has two inwardly extending members which are brought to bear on the collapsing thermoplastic tube so as to form two oppositely disposed inwardly extending folds or gussets. The device gradually tapers to cause the gusseted tube to collapse completely. These gussets are illustrated in the drawing by dotted lines 76. The gusset-forming means 74 can be prepared in a plurality of different size gusset-forming means so as to permit flexibility in the dimension of the resulting gusset in-fold. The gusset-forming means can be such as to impress a gusset in a tube of anywhere from a fraction of an inch up to that providing gussets which extend all the way to the midline of a fully collapsed tube. The gusseted portion of the tube thereafter traverses two Teflon coated plates 78, (or some other suitable non-stick separating surface) each of which extend into the full reach of the gusset 76. Thereafter, a sealed seam is impressed in each of the four gusset folds as shown at 80. The Teflon plate prevents one seam from fusing to the other on each side of the tube. These seams are best formed by heat sealing members which are Teflon coated resistance wires heated to a temperature which will permit the two layers of each of the four gusset folds to be heat sealed together but not severed. These diagonal sealed seams extend over the portions of the tube width corresponding to the gussets along lines diagonal to the length of the tube and the seal pairs of opposite sides are at an angle to one another, preferably at an angle of at least approximately 90°. The seams of each pair of seams on each side of the gusseted tube are in registration with one another. In other words, beneath seam 80, and on the other side of Teflon separator plate 78, there is an identical seal 80. As the tube and seals 80 progress through the system, there is subsequently formed a bottom seal 82 which simultaneously seals and severs the bottom of the gusseted structure. This is accomplished by means of bottom sealing and severing device 84. Seal line 82 is a transverse sealing and severing seam which extends across and through the collapsed tube along a line which includes the inboard ends 86 of each pair of diagonal seams. Transverse sealing and severing device 84 can be any suitable means which will bond and sever the collapsed tube along the defined line. This sealing and severing action will isolate sack blank 88 from the collapsed and gusseted tube. Sack blank 88 will have a seal 90 across the top thereof and 4 triangular regions 92 will be bounded by seal lines 80, 86 and the side edge of the gusseted structure. The sack blank structures 88 may be separately or collectively converted into bag structures by removal of the triangular regions 92 and by the formation of bag mouth opening 94 which simultaneously forms handle loops 96, each of which are formed of two layers of film by virtue of the gusseted structure. This will complete the formation of a handled sack, the bottom of which can be planarly extended so as to have a flat bottom. By "planarly extended" is meant that the bag is extended in internal volume to its utmost by expanding the gussets fully, thereby forming a flat bottom, rectangular in nature, having a length larger than its width.

In a preferred embodiment of the process and system illustrated in the drawing, a linear low density polyethylene tubular film 72, of about 1 mil in thickness, is collapsed and simultaneously gusseted by passing through gusset-forming means 74. This action infolds the collapsed tube to yield gussets 76. As the gusseted tube progresses through the system, seals 80 and 86 are simultaneously formed. This action produces bottom seal 82 and top seal 90 at the same time. This also isolates sack blank 88. Sack blank 88 can then be removed to a station which can separately remove triangular sections 92 and bag mouth opening 94 and form handles 96 on individual blanks. Alternatively, the blanks 88 can be stacked in vertical registration and through the means of suitable cutting die mechanisms, the triangular regions removed and the handle and bag mouth opening can be formed. A typical bag can have a bag front and rear wall width of about 30.48 centimeters, 10.16 centimeter gusset folds, yielding 20.32 centimeter side walls and a bag length of about 50.8-63.5 centimeters with or without handles.

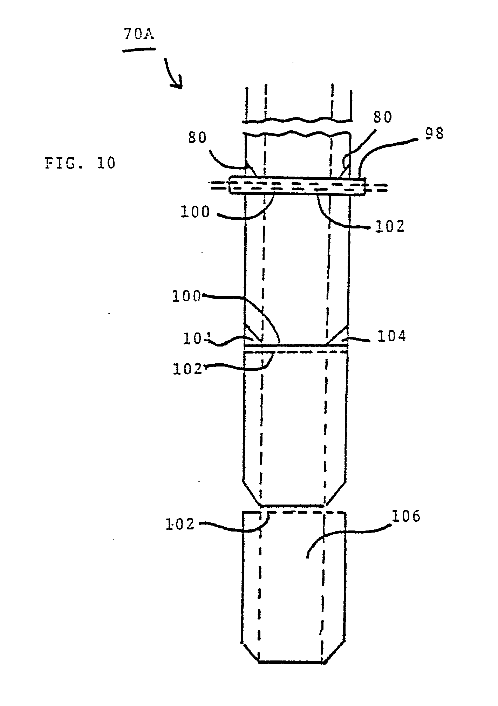

For the formation of bags which do not contain a handle, the process and the system are as shown in Figure 10. The process and system 70A is different from that of Figure 9 beginning at the point where the bottom of the bag is sealed. Thus, a bottom seal and perforating mechanism 98 is shown impressing seal seam 100 in the flattened gusseted tube and, simultaneous therewith, perforation line 102 is formed closely adjacent and parallel to seal line 100. Seal line 100 does not sever the tube, merely seals it. Seal line 100 and perforation line 102 are impressed in the gusseted tube at the same time diagonal seals 80 are impressed into the gussets. Thereafter, by any suitable die cutting mechanism, the four regions 104 are removed from the structure. This will yield sack 106 attached by perforation line 102 to a like structure. Thereafter, these sacks may be rolled upon themselves to form a cylindrical package, collected in a zig-zag folded stack arrangement or individually separated and folded or stacked. Either structure will permit a sack to be torn free along the perforation lines to yield an open mouth bag which when extended fully to the total width of the gusset, will yield a flat bottomed sack. The sack resulting from the process and system of Figure 10 will have a rectangular bottom with a length larger than its width.

In a modification of the process and system shown in Figure 10, open mouth handleless structures can be formed by forming a severance transversely across the tube at the same time bottom seal 100 is formed. Thereafter the corners of the sack blank corresponding to regions 104 can be severed to complete the bag structure.

Bags of the structures described can be formed with a pair of registered tabs as integral extensions of the bag mouth as shown at 99 in Figure 9. The bags can be stacked in registration to contain 50, 100, 150, etc., bags and the tabs 99 fastened together in some suitable manner. For example, the tabs can be ultrasonically welded together. A perforation line across the tab will form a convenient tear-off site for individual bags to be removed from the bag pack.

In forming the flat bottomed bag, it is preferred that the angle between the diagonal seal line and the bottom seal be at least approximately 135° when said bag is in its lay flat condition. It is also preferred that the open mouth portion of the handled sacks of the present invention have stress relief curves or arcs extending from the base of the handle to a raised portion of the bag mouth. This will militate against splitting or tears occurring in the bag mouth during handle extension or when the bag is being filled with bulky material. The handles and bag mouth opening can have any configuration.

In forming the bag structure the pertinent angles need not be precise, e.g., exactly 90°, 45° or 135°. Reasonable processing latitude should permit some deviation from these guidelines. Likewise, in forming seal seams, the ends thereof can be curved or angled in order to accommodate or insure good closure at all film interfaces and joints. Double or plural line seams and seals are also contemplated.

As disclosed, the bag structure formed by the system and process illustrated in Figures 9 and 10 will yield a sack having a rectangular bottom when planarly extended, which bottom will have a length longer than its width. In other words, the sack bottom will not be a square. In order to form a square bottom sack either with or without handles the process and means merely need be modified so that the gusset folds are both infolded to the maximum. That is, the collapsed tube will be gusseted to the longitudinal mid-line of the tube. In this case the centerfold of each gusset will contact the other and the angle between the thereafter formed diagonal seams will be at least about 90°. The resulting sack will then have a substantially flat square bottom when planarly extended.

## Claims

1. A bag structure (40) of a thermoplastic film material comprising front and rear bag walls (60, 62) connected by gusseted side walls (50, 52) and having an open mouth top portion, said open mouth portion having handles (42) located at opposite regions thereof, said handles (42) having a double film thickness as a result of being integral extensions of said front, rear and gusseted side walls (60, 62, 50, 52); characterised in the said bag (40) has a bottom wall planarly extensible so as to form a generally flatch rectangle, wherein the bottom comprises integral extensions of said front, rear and side walls (60, 62, 50, 52) and the closure thereof being 4 two-film gusset-to-wall heat seals, when said bottom is a square, and 4 two-film gusset-to-wall heat seals (54, 56) and 1 two-film front wall-to-back wall heat seal (58) when said bottom is a rectangle having unequal length and width dimensions.

2. A bag structure (40) according to claim 1, characterised in the said bottom wall has no excess film outside of the bulk volumetric capacity of the bottom region of said bag (40).

3. A bag structure (40) according to claim 1, characterised in the said handles (42) are loop handles sealed together at the top (43) thereof.

4. A bag structure (40) according to claim 1, characterised in the said bag mouth is further characterised by having arcuate stress relief areas positioned at opposite ends of said mouth and adjacent the lower portions of said handle and the upper edges of said mouth extending above said arcuate areas.

5. A bag structure (40) according to claim 1, characterised by having two detachable tabs (44) each as an integral extension of a separate edge of said mouth.

6. A bag pack comprising a plurality of stacked thermoplastic bag structures (40) of claim 5, said bag structures (40) being bonded together at said detachable tabs (44).

7. A roll of said bag structures (40) defined in claim 1, wherein a plurality of such bags (40) are interconnected by way of pre-weakened film links (46) or interconnection between each bag structure (40) and so adapted to permit individual bag (40) severance from said roll.

8. A stack of said bag structures (40) defined in claim 1, said bag structures (40) being in zig-zag arrangement, wherein a plurality of such bag structures (40) are interconnected by way of a preweakened film link (46) or interconnection between each bag structure (40) and so adapted to permit individual severance of each bag structure (40) from said stack.

## Patentansprüche

1. Beutelstruktur (40) aus einem thermoplastischen Folienmaterial, die vordere und hintere Beutelwände (60, 62) umfaßt, die durch mit Einsätzen versehene seitliche Wände (50, 52) verbunden sind und einen oberen Öffnungsabschnitt aufweist, wobei dieser obere Öffnungsabschnitt Henkel (42) aufweist, die an seinen entgegengesetzten Bereichen angeordnet sind, wobei diese Henkel (42) als Folge der einstückigen Ausbreitungen der vorderen, hinteren und mit Einsätzen versehenen seitlichen Wände (60, 62, 50, 52) eine doppelte Foliendicke aufweisen; dadurch gekennzeichnet, daß der Beutel (40) eine eben ausbreitbare Bodenwand aufweist, um ein im allgemeinen ebenes Rechteck zu bilden, wobei der Boden einstückig ausgebildete Verlängerungen der vorderen, hinteren und seitlichen Wände (60, 62, 50, 52) umfaßt und dessen Verschluß vier Doppelfilm-Heißsiegelungen des Einsatzes an die Wand sind, wenn der Boden ein Quadrat ist, und vier Doppelfilm-Heißsiegelungen (54, 56) des Einsatzes an die Wand und eine Doppelfilm-Heißsiegelung (58) der vorderen Wand an die hintere Wand ist, wenn der Boden ein Rechteck mit ungleichen Abmessungen von Länge und Breite ist.

2. Beutelstruktur (40) nach Anspruch 1, dadurch gekennzeichnet, daß die Bodenwand außerhalb der aufgefüllten Volumenkapazität des Bodenbereichs des Beutels (40) keine überschüssige Folie aufweist.

3. Beutelstruktur (40) nach Anspruch 1, dadurch gekennzeichnet, daß die Henkel (42) Schlaufenhenkel sind, die an ihrer Oberseite (43) miteinander versiegelt sind.

4. Beutelstruktur (40) nach Anspruch 1, dadurch gekennzeichnet, daß die Beutelöffnung außerdem dadurch gekennzeichnet ist, daß sie gekrümmte Entlastungflächen aufweist, die an entgegengesetzten Enden der Öffnung und neben den unteren Abschnitten der Henkel angeordnet sind und sich die oberen Kanten der Öffnung über diese gekrümmten Flächen erstrecken.

5. Beutelstruktur (40) nach Anspruch 1, dadurch gekennzeichnet, daß sie zwei lösbare Aufhänger (44) jeweils als einstückig ausgebildete Verlängerung der separaten Kante der Öffnung aufweist.

6. Beutelpackung, die eine Vielzahl gestapelter, thermoplastischer Beutelstrukturen (40) nach Anspruch 5 umfaßt, wobei diese Beutelstrukturen (40) an den lösbaren Aufhängern (44) miteinander verbunden sind.

7. Rolle der Beutelstrukturen (40) nach Anspruch 1, worin eine Vielzahl dieser Beutel (40) durch vorher geschwächte Folienverbindungen (46) oder Verbindungen zwischen jeder Beutelstruktur (40) verbunden sind und so angepaßt sind, daß die Trennung des einzelnen Beutels (40) von dieser Rolle möglich ist.

8. Stapel der Beutelstrukturen (40) nach Anspruch 1, wobei diese Beutelstrukturen (40) in Zick-Zack-Anordnung sind, wobei eine Vielzahl dieser Beutelstrukturen (40) durch eine vorher geschwächte Folienverbindung (46) oder Verbindung zwischen jeder Beutelstruktur (40) verbunden sind, die so angepaßt ist, daß die einzelne Trennung jeder Beutelstruktur (40) von diesem Stapel möglich ist.

## Revendications

1. Une structure de sac (40) en matériau de film thermoplastique, comprenant des parois de sac avant et arrière (60, 62) reliées par des parois latérales à soufflet (50, 52) et présentant une partie supérieure d'embouchure ouverte, ladite partie d'embouchure ouverte présentant des poignées (42) situées sur des zones opposées, lesdites poignées (42) présentant une épaisseur de film double du fait qu'elles constituent des prolongements monobloc desdites parois latérales à soufflet avant, arrière (60, 62, 50, 52), caractérisée en ce que ledit sac (40) présente une paroi de fond extensible dans un plan de façon à former un rectangle généralement plat, dans lequel le fond comprend des prolongements monobloc desdites parois avant, arrière, et latérales (60, 62, 50, 52) et, la fermeture du sachet étant réalisée par quatre joints d'étanchéité réalisés par chauffage, soufflet sur paroi à deux films, lorsque ledit fond est un carré, et réalisée par quatre joints d'étanchéité réalisés par chauffage, soufflet sur paroi à deux films (54, 56), et un joint thermique de paroi à deux films (58), paroi avant contre paroi arrière, lorsque ledit fond est un rectangle présentant une longueur et une largeur inégales.

2. Une structure de sac (40) selon la revendication 1, caractérisée en ce que ladite paroi de fond ne présente pas de film en excès à l'extérieur de la capacité de vrac de la zone de fond dudit sac (40).

3. Une structure de sac (40) selon la revendication 1, caractérisée en ce que lesdites poignées (42) sont des poignées en boucle soudées à leur partie supérieure (43).

4. Une structure de sac (40) selon la revendication 1, caractérisée en ce que ladite embouchure de sac est caractérisée en outre par le fait de présenter des zones arquées de relaxation de contrainte situées à des extrémités opposées de ladite embouchure et de façon adjacente aux parties inférieures de ladite poignée et les bords supérieurs de ladite embouchure s'étendant au-dessus desdites zones arquées.

5. Une structure de sac (40) selon la revendication 1, caractérisée en ce qu'elle comporte deux attaches amovibles (44), chacune représentant un prolongement monobloc d'un bord séparé de ladite embouchure.

6. Un ensemble de sacs comprenant une pluralité de structures de sac en matériau thermoplastique empilées (40) selon la revendication 5, lesdites structures de sac (40) étant réunies ensemble sur lesdites pattes amovibles (44).

7. Un rouleau desdites structures de sac (40) définies selon la revendication 1, dans lequel une pluralité de ces sacs (40) sont reliés au moyen de liens (46) en film ou interconnexion, pourvus au préalable d'une amorce de rupture, et situés entre chaque structure de sac (40), et aptes à permettre de détacher chaque sac (40) individuellement dudit rouleau.

8. Une pile desdites structures de sac (40) définie selon la revendication 1, lesdites structures de sac (40) étant agencées en zig-zag, dans laquelle une pluralité de ces structures de sac (40) sont reliées par un lien en film (46) pourvu d'une amorce de rupture, ou par une interconnexion entre chaque structure de sac (40) et apte à permettre de détacher chaque sac (40) individuellement dudit rouleau.

PRIOR ART

FIG. 1

FIG. 3

FIG. 2

FIG. 4

FIG. 5

FIG. 8

FIG. 6

FIG. 7

FIG. 9

FIG. 10